(19) Europäisches Patentamt
European Patent Office
Office européen des brevets

(11) Veröffentlichungsnummer : **0 064 225**
**B1**

(12) # EUROPÄISCHE PATENTSCHRIFT

(45) Veröffentlichungstag der Patentschrift : **28.05.86**

(51) Int. Cl.⁴ : **C 09 B 67/46**, B 01 F 17/00, D 06 P 1/613

(21) Anmeldenummer : **82103386.7**

(22) Anmeldetag : **22.04.82**

(54) **Verwendung von veresterten Oxalkylaten als Präparationsmittel für Farbstoffe und entsprechende Farbstoffzubereitungen.**

(30) Priorität : **27.04.81 DE 3116581**

(43) Veröffentlichungstag der Anmeldung : **10.11.82 Patentblatt 82/45**

(45) Bekanntmachung des Hinweises auf die Patenterteilung : **28.05.86 Patentblatt 86/22**

(84) Benannte Vertragsstaaten : **CH DE FR GB IT LI**

(56) Entgegenhaltungen :
**BE-A- 528 360**
**BE-A- 671 110**
**DE-A- 1 911 328**
**DE-A- 1 953 331**
**DE-A- 1 955 590**
**DE-C- 605 973**
**FR-A- 2 304 715**
**GB-A- 1 465 700**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Schneider, Manfred**
**Cuntzstrasse 1**
**D-6239 Eppstein/Taunus (DE)**
Erfinder : **Kruse, Hubert**
**Luisenstrasse 33**
**D-6233 Kelkheim (Taunus) (DE)**
Erfinder : **Opitz, Konrad, Dr.**
**Schwedenstrasse 22**
**D-6237 Liederbach (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Gegenstand der Erfindung ist die Verwendung wasserlöslicher Verbindungen der Formel

$$\left[A-O-(X-O)_n-\overset{O}{\overset{\|}{C}}-\right]_m R \qquad (I)$$

in der A für einen aliphatischen Rest mit 10 bis 24 C-Atomen, X für gleiche oder verschiedene Gruppen der Formeln

$$-CH_2-CH_2- \text{ und } -CH_2-CH(CH_3)-$$

steht, R für den Rest einer $C_1$-$C_4$-Carbonsäure R $[COOH]_m$ steht, m die Zahl 1 oder 2 ist und n gleiche oder verschiedene Zahlen von 8 bis 100 bedeutet, wobei der Anteil der Oxalkylgruppen, bezogen auf das Gewicht des Gesamtmoleküls, 75-96 %, vorzugsweise 80-94 %, ist und das Molgewicht 1 000 bis 10 000, vorzugsweise 2 500 bis 5 000, beträgt, als Präparierungsmittel für Farbstoffe.

Bevorzugt ist die Verwendung von Verbindungen der Formel I, in der X für $-CH_2-CH_2-$ steht. Weiterhin bevorzugt ist die Verwendung von Verbindungen der Formel I, in der A ein Alkylrest mit 12 bis 18 C-Atomen ist und R für den Rest einer $C_1$-$C_4$-Alkan- oder Alkencarbonsäure R $[COOH]_m$, insbesondere Essigsäure, steht.

Die erfindungsgemäß zu verwendenden Verbindungen der Formel I lassen sich, gegebenenfalls nach Zugabe eines Katalysators, durch Veresterung der Alkylenoxidaddukte mit der oder den entsprechenden Säuren herstellen.

Diese Verbindungen der Formel I eignen sich hervorragend als Präparationsmittel für in Wasser unlösliche bis schwerlösliche Farbstoffe, insbesondere Küpen- und Dispersionsfarbstoffe, und erlauben die Herstellung hochkonzentrierter, dispergiermittelarmer Flüssig- und Pulvereinstellungen, wobei diese Einstellungen eine Vielzahl vorteilhafter Eigenschaften aufweisen.

Die Erfindung betrifft deshalb auch Zubereitungen, die durch einen Gehalt an einem feinverteilten Farbstoff, dessen Teilchengröße i. a. unter 5 µm, vorteilhaft unter 3 µm ist, und einer Verbindung der Formel I gekennzeichnet sind.

Die bisher bekannten Zubereitungen von Dispersionsfarbstoffen weisen eine Reihe von Nachteilen auf, die die erfindungsgemäßen Farbstoffzubereitungen nicht zeigen. So verursachen herkömmliche Zubereitungen von Dispersionsfarbstoffen, die ausschließlich anionische Dispergiermittel enthalten, beim Anrühren von Druckpasten mit synthetischen Verdickungsmitteln einen unerwünschten Abfall der Viskosität. Normalerweise steigt mit zunehmendem Gehalt an Dispergiermittel im Mahl- oder Knetteig auch die Viskosität der Zubereitung stark an, so daß in ungünstigen Fällen, vor allem bei etwas höheren Temperaturen, die Einstellungen dickflüssig oder sogar fest werden. Andererseits kann der Anteil des anionischen Dispergiermittels nicht beliebig verringert werden, da sonst oft instabile oder von vornherein ungenügend fein verteilte Dispersionen erhalten werden.

In den Färbereien werden aus Rationalisierungsgründen immer kürzere Flottenverhältnisse der Färbebäder angestrebt. Dafür werden möglichst hochkonzentrierte Farbstoffzubereitungen bevorzugt. Die hohen Anteile anionischer Dispergiermittel in herkömmlichen Dispersionsfarbstoffpräparationen können bei modernen Färbeverfahren, wie in der Jet-Färberei, zu unerwünschter Schaumbildung führen. Oft wird auch ein starkes Farbstoffrückhaltevermögen, vor allem bei Klotzfärbungen, beanstandet. In Druckereien hat der hohe Dispergiermittelanteil in üblichen Dispersionsfarbstoffpräparationen den schon genannten ungünstigen Einfluß auf die Viskosität der Druckpasten und macht außerdem ein aufwendiges Nachwaschen der Drucke erforderlich.

Die Erfindung erlaubt es nun, Farbmittelzubereitungen herzustellen, die den genannten Einschränkungen nicht unterworfen sind und sich besonders für eine Reihe von Spezialaufgaben eignen. So können erfindungsgemäße wäßrige Farbmitteldispersionen ohne Qualitätseinbuße zu Pulvern getrocknet werden. Sowohl die Pulver als auch die Flüssigeinstellungen eignen sich hervorragend zum Färben und Bedrucken der verschiedensten Materialien.

In der BE-A-528360 sind Mischester mit verzweigter Struktur aus einer Polycarbonsäure mit 3 bis 6 Carboxygruppen, einem Polyethylenoxidwachs und Fettalkoholen beschrieben, die zur Herstellung von wäßrigen Emulsionen und Dispersionen eingesetzt werden können.

Aus der DE-A-1 911 328 sind Fettsäureester verzweigter Polyetheralkohole bekannt, die zum Dispergieren von Farbstoffen in wäßrigen Bädern oder organischen Lösungsmitteln geeignet sind.

Aus der DE-C-605973 sind bereits Fettsäureester von ethoxylierten Fettalkoholen bekannt, die sich von den Verbindungen der Formel I in der Art der Fettsäuren und dem Grad der Ethoxylierung unterscheiden.

Im folgenden werden weitere bevorzugte Ausgestaltungen der Erfindung näher erläutert, wobei sich Prozentangaben auf das Gewicht beziehen, wenn nichts anderes angegeben ist.

Bevorzugt werden als Verbindungen der Formel I Veresterungsprodukte von mit Ethylen- und/oder Propylenoxid umgesetzten Alkoholen A-OH mit 10 bis 24 C-Atomen mit $C_1$ bis $C_4$-Alkan- oder

Alkencarbonsäuren R[COOH]$_m$ mit m = 1 oder 2. Der Anteil des Ethylen- und/oder Propylenoxides ist dabei so bemessen, daß eine gute Wasserlöslichkeit des Endproduktes resultiert. Den bevorzugten Verbindungen der Formel I zugundeliegende Alkohole mit 10 bis 24 C-Atomen sind beispielsweise Lauryl-, Myristyl-, Cetyl-, Stearyl-, Oleylalkohol, Alkohole aus der Oxosynthese oder auch Mischungen derselben.

Bevorzugte Zubereitungen enthalten 5 bis 90 %, insbesondere 10 bis 80 %, Farbstoff, 2 bis 30 %, insbesondere 2 bis 15 %, Verbindung der Formel I, bis zu 20 %, insbesondere bis zu 10 %, anionische Dispergiermittel und bis zu 70 % Wasser und/oder Wasserrückhaltemittel. Darüber hinaus können die erfindungsgemäßen Zubereitungen in solchen Präparationen übliche Hilfsmittel enthalten, beispielsweise hygroskopische Mittel, Schaumdämpfer, Entstaubungsmittel oder Konservierungsmittel. Enthalten diese Präparationen in solchen Einstellungen übliche Hilfsmittel, so können diese vor, während oder nach der Dispergierung der Farbstoffe zugesetzt werden.

Sofern die erfindungsgemäßen Präparationen anionische Dispergiermittel enthalten, werden die hierfür üblicherweise verwendeten Dispergiermittel eingesetzt. Bevorzugt sind Kondensationsprodukte aus aromatischen Sulfonsäuren und Formaldehyd, insbesondere Kondensationsprodukte aus Alkylnaphthalinsulfonsäuren, vor allem Methylnaphthalinsulfonsäuren, und Formaldehyd, wie sie aus der DE-PS 2 442 514 bekannt sind. Geeignet sind auch Kondensationsprodukte aus gegebenenfalls substituiertem Phenol mit Formaldehyd und Natriumhydrogensulfit sowie Alkalisalze von Ligninsulfonsäuren.

Im Vergleich zu üblichen Farbstoffzubereitungen zeichnen sich die erfindungsgemäßen Präparationen durch einen sehr geringen Gehalt an oberflächenaktiven Substanzen aus.

Trotz des geringen Einsatzes an oberflächenaktiven Substanzen, insbesondere an anionischen Dispergiermitteln, erhält man erfindungsgemäße Präparationen, die bei sehr hohem Farbstoffgehalt als Flüssigeinstellung gut fließfähig und lagerstabil sind.

Wegen der guten Verträglichkeit mit synthetischen Verdickungsmitteln können die Präparationen in Drucktinten für den Rouleauxdruck mit sehr « seichten » Gravuren eingesetzt werden, wobei farbstarke Drucke erhalten werden. Ebenso ist der Einsatz im Rotationsfilmdruck möglich.

Die Herstellung der erfindungsgemäßen Präparationen kann nach allen bekannten Verfahren erfolgen. Zur Herstellung von Präparationen wasserunlöslicher Farbstoffe wird der Farbstoff oder eine Mischung von Farbstoffen mit einem oder mehreren der genannten Verbindungen der Formel I, gegebenenfalls einem anionischen Dispergiermittel sowie gegebenenfalls anderen Zusätzen vermischt und einer mechanischen Zerkleinerung unterworfen. Hierbei kann die Reihenfolge der Zugabe der Komponenten auch verändert werden. Die mechanische Zerkleinerung erfolgt bevorzugt in Dispergatoren wie Knetern, Kugelmühlen, Perlmühlen, Sandmühlen oder Attritoren. Das Erreichen der gewünschten Feinverteilung von im allgemeinen < etwa 5 µm, vorzugsweise < etwa 3 µm Teilchengröße kann durch einen Filterpapiertest oder mit dem Mikroskop festgestellt werden. Die so erhaltenen Präparationen enthalten die Farbstoffe in stabiler, feinverteilter Form.

Die Feinverteilung bleibt auch bei mehrwöchiger Lagerung sowohl bei Raumtemperatur als auch bei 50 °C erhalten und wird auch durch Kälteeinwirkung nicht beeinträchtigt.

Zur Herstellung einer pulverförmigen Präparation können wäßrige Präparationen in üblicher Weise, beispielsweise mittels Zerstäubungstrocknung, getrocknet werden. Die so erhaltenen pulverförmigen Präparationen werden durch einfaches Einrühren in Wasser oder in Bindemittellösungen gut redispergiert.

Durch den geringen Gehalt an oberflächenaktiven Substanzen, insbesondere an anionischen Dispergiermitteln, tritt beim Einsatz der erfindungsgemäßen Farbstoffpräparationen in Färbebädern oder Druckpasten keine retardierende Wirkung auf und es werden brillante Farbtöne erhalten. Außerdem kann im Falle des Direktdrucks die erforderliche Nachwäsche wesentlich verkürzt werden oder bei Verwendung körperarmer Verdickungen sogar ganz entfallen, ohne daß es zu einer merklichen Griffverschlechterung der bedruckten Ware käme oder Brillanz und Farbton beeinträchtigt würden. In diesem Falle werden die Präparationen vorteilhaft auf einen pH-Wert von etwa 6 bis 8 eingestellt.

In einer besonders bevorzugten Ausgestaltung der Erfindung werden Farbstoffe eingesetzt, die bei atmosphärischem Druck zwischen 150 und 220 °C zu mindestens 60 % unzersetzt sublimieren, insbesondere Dispersionsfarbstoffe aus der Reihe der Mono- oder Disazo-, Anthrachinon-, Chinophthalon-, Nitro-, Azomethin-, Naphthalintetracarbonsäure- oder Benzoxanthenfarbstoffe oder Mischungen solcher Farbstoffe. Die so erhaltenen Präparationen eignen sich zur Herstellung von Druckfarben für das Bedrucken von Transferpapieren für den Thermodruck.

In den folgenden Beispielen beziehen sich Prozentangaben und Teile auf das Gewicht, sofern nichts anderes angegeben ist.

Beispiel 1

300 Teile des Farbstoffes der Formel

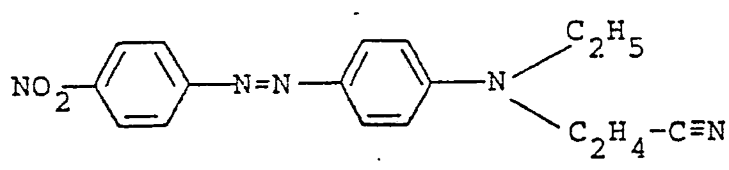

(1)

wurden in einer Lösung aus 50 Teilen des Essigsäureesters eines ethoxylierten $C_{16}/C_{18}$-Alkohol-Gemisches (eines aus etwa gleichen Teilen bestehenden Gemisches aus Cetyl- und Stearylalkohol) mit einem mittleren Molgewicht von 3 800 und einem Ethylenoxidanteil von 92 % (im folgenden als « nichtionogenes Dispergiermittel I » bezeichnet) und 25 Teilen des aus Beispiel D der DE-PS 2 442 514 bekannten Dispergiermittels (im folgenden « anionisches Dispergiermittel A »), 100 Teilen Ethylenglykol, 2 Teilen Chloracetamid als Konservierungsmittel und 350 Teilen Wasser in einer Perlmühle mit Siliquarzit-Glasperlen gemahlen. Nach 3 Stunden erhielt man eine Dispersion, deren Teilchen zu ca. 90 % kleiner als 3 µm waren. Die Teigeinstellung wurde mit Wasser auf 1 000 Teile aufgefüllt und von den Perlen abfiltriert.

Die erhaltene 30 % Farbstoff enthaltende Dispersion war dünnflüssig und bei Raumtemperatur und bei 50 °C mehrere Monate lagerstabil. Sie war gut zum Färben von Wickelkörpern geeignet. Beim Einrühren in eine wäßrige Polyacrylat-Druckverdickung veränderte sich die Viskosität nur unwesentlich, so daß mit seichten Gravuren gedruckt werden konnte. Die Nachwäsche konnte gegenüber Drucken mit herkömmlichen Farbstoffzubereitungen unter Verwendung natürlicher Verdickungsmittel wesentlich verkürzt werden oder sogar ganz entfallen.

Beispiel 2

380 Teile des Farbstoffes der Formel (2)

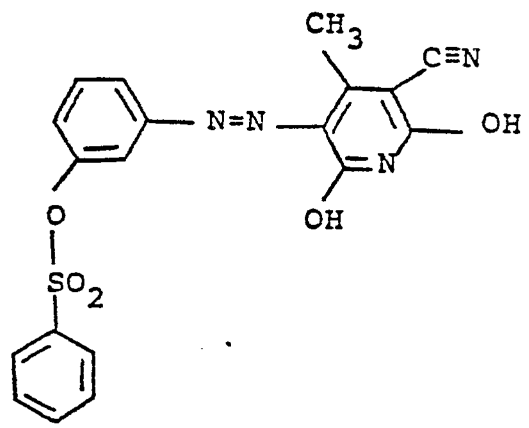

(2)

wurden in einer Lösung aus 60 Teilen des Essigsäureesters eines ethoxylierten Oleylalkohols mit einem mittleren Molgewicht 1100 und einem Ethylenoxidanteil von 80 % (im folgenden als « nichtionogenes Dispergiermittel II » bezeichnet), 120 Teilen Ethylenglykol, 2 Teilen Chloracetamid als Konservierungsmittel und 300 Teilen Wasser in einer Perlmühle mit Siliquarzit-Glasperlen 4 Stunden gemahlen. Nach dieser Zeit erhielt man eine gut fließfähige Dispersion, deren Teilchen zu über 90 % kleiner als 3 µm waren. Die Teigeinstellung wurde mit Wasser auf 1 000 Teile aufgefüllt und von den Perlen abfiltriert. Die erhaltene 38 % Farbstoff enthaltende Präparation war über mehrere Monate bei Raumtemperatur und bei 50 °C lagerstabil und verfügte über die in Beispiel 1 genannten guten anwendungstechnischen Eigenschaften.

Beispiele 3 bis 10

Verwendete man anstelle der in Beispiel 2 genannten Komponenten die in den folgenden Tabellen angegebenen Farbstoffe und Dispergiermittel und verfuhr im übrigen analog Beispiel 2, so resultierten ebenfalls freifließende, lagerstabile Teigeinstellungen.

a) Farbstoffe

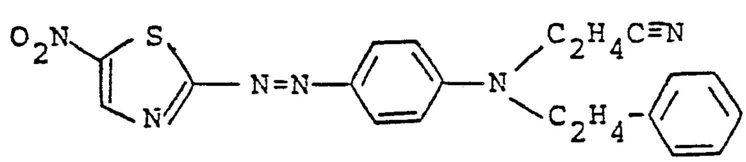

(3)

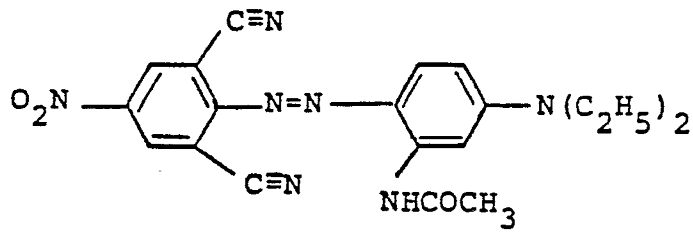

(4)

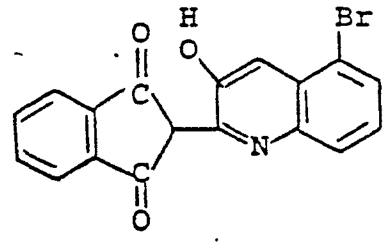

(5)

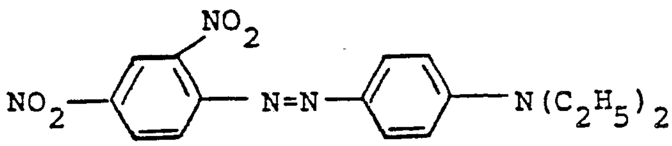

(6)

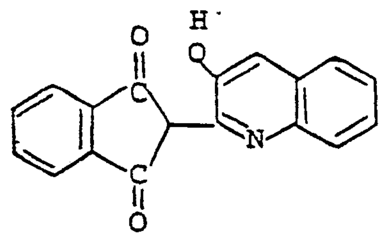

(7)

b) nichtionogene Dispergiermittel

III Bernsteinsäureester eines ethoxylierten Stearylalkohols, 85 % Ethylenoxidanteil, Molgewicht 2 600

IV Essigsäureester eines ethoxylierten $C_{16}/C_{18}$-Alkohol-Gemisches, 94 % Ethylenoxidanteil, Molgewicht 3 750

V Essigsäureester eines ethoxylierten $C_{16}/C_{18}$-Alkohol-Gemisches, 89 % Ethylenoxidanteil, Molgewicht 2 500

c) anionische Dispergiermittel

Dispergiermittel B : Sulfobernsteinsäurehalbester eines ethoxylierten Kondensationsproduktes aus Nonylphenol und Formaldehyd (Beispiel B der DE-PS 2 132 403).

Dispergiermittel C : Natriumsalz einer Ligninsulfonsäure.

Dispergiermittel D : Kondensationsprodukt aus Kresol, dem Natriumsalz der 2-Hydroxynaphthalin-6-sulfonsäure (« Schäffersalz »), Formaldehyd und Natriumhydrogensulfit

| Beispiel | Farbstoff | | nicht-ionisches Dispergiermittel | | anionisches Dispergiermittel | | Ethylenglykol | Mahldauer (Std.) |
|---|---|---|---|---|---|---|---|---|
| | Typ | Teile | Typ | Teile | Typ | Teile | Teile | |
| 3 | 3 | 320 | IV | 80 | C | 30 | 80 | 7 |
| 4 | 4 | 400 | IV | 40 | B | 20 | 200 | 6 |
| 5 | 4 | 400 | II | 40 | B | 20 | 200 | 6 |
| 6 | 5 | 370 | III | 50 | A | 25 | 100 | 4 |
| 7 | 6 | 400 | III | 50 | A | 25 | 120 | 4 |
| 8 | 6 | 350 | IV | 50 | A | 20 | 100 | 3 |
| 9 | 2 | 400 | II | 60 | C | 30 | 150 | 5 |
| 10 | 7 | 400 | I | 80 | C | 20 | 100 | 5 |

Beispiel 11

313 Teile eines feuchten Preßkuchens des Farbstoffs der Formel (2) mit einem Feststoffgehalt von 32 % wurden mit 100 Teilen einer wäßrigen Lösung, welche 20 Teile des nichtionogenen Dispergiermittels V und 13.3 Teile des anionischen Dispergiermittels A enthielt, perlgemahlen. Nach 5 Stunden Mahldauer war eine sehr gute Feinverteilung des Farbstoffes erreicht. Der Mahlteig wurde von den Perlen abgetrennt und über einen Zerstäubungstrockner bei 160 bis 180 °C Eingangs- und 70 bis 80 °C Ausgangstemperatur sprühgetrocknet. Man erhielt ein rieselfähiges, 75 % Farbstoff enthaltendes, Pulver, welches sich gut durch Einrühren in einer Druckverdickung, einem wäßrigen Färbebad oder einer Klotzflotte verteilen ließ.

Beispiel 12

417 Teile eines feuchten Preßkuchens des Farbstoffs der Formel (5) mit einem Feststoffgehalt von 24 % wurden mit 75 Teilen einer wäßrigen Lösung, welche 20 Teile des nichtionogenen Dispergiermittels IV und 10 Teile des Dispergiermittels D enthielt, perlgemahlen. Nach 4 Stunden Mahlzeit wurden der Dispersion weitere 5 Teile des Dispergiermittels D zugegeben und nochmals 30 Minuten gemahlen. Der Mahlteig wurde von den Perlen abgetrennt und wie im Beispiel 13 sprühgetrocknet. Es resultierte ein Pulver mit einem Feststoffgehalt von 70 % und den im Beispiel 13 genannten vorteilhaften Eigenschaften.

**Patentansprüche**

1. Verwendung wasserlöslicher Verbindungen der Formel

$$\left[A-O-(X-O)_n-\overset{O}{\overset{\|}{C}}-\right]_m R \qquad (I)$$

in der A für einen aliphatischen Rest mit 10 bis 24 C-Atomen, X für gleiche oder verschiedene Gruppen der Formel

$$-CH_2-CH_2- \text{ und } -CH_2-CH(CH_3)-$$

steht, R für den Rest einer $C_1$-$C_4$-Carbonsäure $R[COOH]_m$ steht, m die Zahl 1 oder 2 ist und n gleiche oder verschiedene Zahlen von 8 bis 100 bedeutet, wobei der Anteil der Oxalkylgruppen, bezogen auf das Gewicht des Gesamtmoleküls, 75-96 % ist und das Molgewicht 1 000 bis 10 000 beträgt, als Präparierungsmittel für Farbstoffe.

2. Verwendung von Verbindungen der Formel I nach Anspruch 1, wobei X für $-CH_2-CH_2-$ steht.

3. Verwendung von Verbindungen der Formel I nach Anspruch 1 oder 2, wobei A ein Alkylrest mit 12 bis 18 C-Atomen ist und R für den Rest einer $C_1$-$C_4$-Alkan- oder Alkencarbonsäure $R[COOH]_m$ mit m gleich 1 oder 2 steht.

4. Verwendung von Verbindungen der Formel I nach Anspruch 1, wobei der Anteil der Oxalkylgruppen, bezogen auf das Gewicht des Gesamtmoleküls, 80 bis 94 % ist und das Molgewicht 2 500 bis 5 000 beträgt.

5. Verwendung der Verbindungen der Formel I nach einem der Ansprüche 1 bis 4, wobei R eine Methylgruppe ist.

6. Zubereitungen, gekennzeichnet durch einen Gehalt an einem Farbstoff mit einer Teilchengröße unter etwa 5 µm und einer Verbindung der Formel I nach Anspruch 1, in der A, X, R, n und m nach einem der Ansprüche 1 bis 5 definiert sind.

7. Zubereitungen nach Anspruch 6, gekennzeichnet durch einen Gehalt an einem Farbstoff mit einer Teilchengröße unter etwa 3 µm.

8. Zubereitungen nach Anspruch 6 oder 7, gekennzeichnet durch einen Gehalt an einem Dispersions- oder Küpenfarbstoff.

9. Zubereitungen nach einem der Ansprüche 6 bis 8, gekennzeichnet durch einen Gehalt an
5 bis 90 Gew.-% Farbstoff,
2 bis 30 Gew.-% Verbindung der Formel I,
0 bis 20 Gew.-% anionische Dispergiermittel und
0 bis 70 Gew.-% Wasser und/oder Wasserrückhaltemittel,
sowie gegebenenfalls weiterem Hilfsmittel.

10. Zubereitungen nach einem der Ansprüche 6 bis 9, gekennzeichnet durch einen Gehalt an
10 bis 80 Gew.-% Farbstoff,
2 bis 15 Gew.-% Verbindung der Formel I,
0 bis 10 Gew.-% anionische Dispergiermittel und
0 bis 70 Gew.-% Wasser und/oder Wasserrückhaltemittel,
sowie gegebenenfalls weiterem Hilfsmittel.

**Claims**

1. Use of water-soluble compounds of the formula

$$\left[A-O-(X-O)_n-\overset{O}{\overset{\|}{C}}-\right]_m R \qquad (I)$$

in which A represent an aliphatic radical having 10 to 24 C-atoms, X represents identical or different groups of the formula

$$—CH_2—CH_2— \text{ and } —CH_2—CH(CH_3)—,$$

R represents the radical of a $C_1$-$C_4$-carboxylic acid $R(COOH)_m$, m is the number 1 or 2 and n denotes identical or different numbers from 8 to 100, provided that the proportion of oxyalkyl groups, relative to the weight of the overall molecule, ist 75 to 96 % and that the molecular weight is 1 000 to 10 000, as preparing agents for dyestuffs.

2. Use of compounds of formula (I) according to claim 1, wherein X represents $—CH_2—CH_2—$.

3. Use of compounds of formula (I) according to claim 1, or 2, wherein A is an alkyl radical having 12 to 18 C-atoms and R denotes the radical of a $C_1$-$C_4$-alkanecarboxylic or $C_1$-$C_4$-alkenecarboxylic acid $R(COOH)_m$ in which m is 1 or 2.

4. Use of compounds of formula (I) according to claim 1, wherein the proportion of oxyalkyl groups, relative to the weight of the overall molecule, is 80 to 94 % and the molecular weight is 2 500 to 5 000.

5. Use of compounds of formula (I) according to any of claims 1 to 4, wherein R is the methyl group.

6. Preparations characterized by a content of a dyestuff having a particle size of below about 5 µm and a compound of formula (I) according to claim 1, in which A, X, R, n and m are defined according to any of claims 1 to 5.

7. Preparations as claimed in claim 6, characterized by a content of a dyestuff having a particle size of below about 3 µm.

8. Preparations as claimed in claim 6 or 7, characterized by a content of a disperse or vat dyestuff.

9. Preparations as claimed in any of claims 6 to 8, characterized by a content of
5 to 90 % of a dyestuff
2 to 30 % of a compound of the formula (I)
0 to 20 % of anionic dispersing agent(s) and
0 to 70 % of water and/or of humectant(s), and,
if desired, further auxiliaries.

10. Preparations as claimed in any of claims 6 to 9, characterized by a content of
10 to 80 % of a dyestuff
2 to 15 % of a compound of the formula (I)
0 to 10 % of anionic dispersing agent(s) and
0 to 70 % of water and/or humectant(s), and
if desired, further auxiliaries.

**Revendications**

1. Utilisation, comme agents de préparation pour colorants, de composés de formule

$$\left[A-O-(X-O)_n-\overset{O}{\overset{\|}{C}}-\right]_m R \qquad (I)$$

dans laquelle A désigne un radical aliphatique en $C_{10}$ à $C_{24}$, X des groupes identiques ou différents de formules

$$—CH_2CH_2— \text{ et } —CH_2CH(CH_3)—$$

R le radical d'un acide carboxylique en $C_1—C_4$ $R[COOH]_m$, m est le nombre 1 ou 2 et n désigne des nombres identiques ou différents de 8 à 100, la proportion des groupes oxalkyliques par rapport au poids de la molécule totale étant de 75 à 96 %, et la masse moléculaire de 1 000 à 10 000.

2. Utilisation selon la revendication 1 de composés de formule 1 dans lesquels X est le groupe $—CH_2—CH_2—$.

3. Utilisation selon la revendication 1 ou 2 de composés de formule I dans lesquels A est un alkyle en $C_{12}$-$C_{18}$ et R le radical d'un acide alcane-carboxylique ou alcène-carboxylique en $C_1$-$C_4$ $R[COOH]_m$, m étant le nombre 1 ou 2.

4. Utilisation de composés de formule 1 selon la revendication 1, dont la teneur en groupes oxalkyliques, rapportée à la masse de la molécule totale, est de 80 à 94 %, et la masse moléculaire de 2 500 à 5 000.

5. Utilisation de composés de formule I selon l'une quelconque des revendications 1 à 4, dans lesquels R est le groupe méthyle.

6. Préparations caractérisées en ce qu'elles contiennent un colorant en particules d'une dimension inférieure à environ 5 µm, avec un composé de formule I selon la revendication 1 dans lequel A, X, R, n et m sont tels que définis à l'une des revendications 1 à 5.

7. Préparations selon la revendication 6 caractérisées en ce qu'elles contiennent un colorant en particules d'une dimension inférieure à environ 3 µm.

8. Préparations selon la revendication 6 ou 7 caractérisées en ce qu'elles contiennent un colorant de dispersion ou un colorant de cuve.

9. Préparations selon l'une des revendications 6 à 8 caractérisées en ce qu'elles contiennent :

5 à 90 % en poids du colorant,
2 à 30 % en poids du composé de formule I,
0 à 20 % en poids d'un dispersant anionique et
0 à 70 % en poids d'eau et/ou d'un agent de rétention d'eau,

avec le cas échéant d'autres adjuvants.

10. Préparations selon l'une des revendications 6 à 9, caractérisées en ce qu'elles contiennent :

10 à 80 % en poids du colorant,
2 à 15 % en poids du composé de formule I,
0 à 10 % en poids d'un dispersant anionique et
0 à 70 % en poids d'eau et/ou d'un agent de rétention d'eau,

avec le cas échéant d'autres adjuvants.